# EUROPEAN PATENT SPECIFICATION

(11) **EP 2 121 826 B1**
(45) Date of publication and mention of the grant of the patent: **26.01.2011**
(21) Application number: 07715350.0
(22) Date of filing: 19.03.2007
(51) Int. Cl.: C08K 5/5419

(54) **FLAME EETAEDANT POLYCARBONATE RESIN COMPOSITION**
FLAMMWIDRIGE POLYCARBONATHARZZUSAMMENSETZUNG
COMPOSITION IGNIFUGÉE À BASE DE RÉSINE DE POLYCARBONATE

(43) Date of publication of application: 25.11.2009
(73) Proprietor: Sumitomo Dow Limited, Tokyo 103-0026 (JP)
(72) Inventor: OKADA, Koji, Osaka-shi Osaka 554-8558 (JP); VAN NUFFEL, Claude, 4530AA Terneuzen (NL)
(74) Representative: Dossmann, Gérard
(86) International application number: PCT/JP2007/056141
(87) International publication number: WO 2008/114462

(56) References cited:
- WO-A-02/28970
- JP-A- 2002 332 401

## Description

### Field of the Invention

The present invention relates to a polycarbonate resin composition with excellent flame retardance, and more specifically, to a polycarbonate resin composition with uniquely and dramatically improved flame retardance without adversely affecting the heat resistance, thermal stability and like features of polycarbonate resins and without using any chlorine type or bromine type flame retardant.

### Background of the Invention

Polycarbonate resins are thermoplastic resins with excellent impact resistance, clarity, heat resistance, thermal stability and the like and are used extensively in electrical, electronic, ITE, mechanical, automotive and other application areas. However, materials which have a high degree of flame retardance are sought in the aforementioned application areas in order to satisfy the demand for safer products.

Furthermore, the thickness of molded resin products tends to be less for lighter weight products, and it requires even higher degree of flame retardance.

Organic bromine compounds, phosphorus type compounds and the like have previously been used as flame retarding agents. However, considering environmental concerns to use these flame retardant agents, flame retardant resin materials that do not contain these flame retarding agents are urgently needed.
The development of materials using siloxane compounds without using organic bromine type and phosphorus type flame retarding agents have attracted attention in recent years. Silsesquioxane compounds, shown as (RSiO1.5)n siloxane compounds, attracted attention as compounds capable of imparting a variety of functionality to thermoplastic resins since their molecules contain unique structures such as cages, ladders and the like, and they can be modified using R substituents.

A method to add a silsesquioxane compound to a polycarbonate resin to impart light diffusing properties, for example, has been proposed (Reference 1), but imparting flame retardance was not disclosed. In addition, a method to add a silsesquioxane compound and also an organic metal salt compound to a polycarbonate resin to impart flame retardance has been proposed (Reference 2), but the silsesquinoxane compound (RSiO_{1.5})ₙ disclosed had n = 8, a cubical structure (a cage shape) and the substituent R was a phenyl group or a biphenyl group.

Reference 1: Japanese Patent Application Public Disclosure (Kokai) No. H06-192556
Reference 2: Japanese Patent Application Public Disclosure (Kokai) No. 2004-510869

### Problems to be solved by the Invention

However, the flame retardance level which defined by the flammability test standard UL94 was still V-0 at 3.2 mm or 1.6 mm thickness as shown in Reference 2, and did not reach to the degree of flame retardance demanded for today's thin walled molded products.

### Means to solve the Problems

The inventors conducted an extensive study to solve the problems described above. As a result, the inventors discovered a flame retardant polycarbonate resin composition which could achieve V-0 level flame retardance with thin test pieces of 1.0 mm thickness by applying a silsesquioxane compound with a unique n = 4 three sided cone type structure unlike the n = 8 cage type structure used in the prior art as the silsesquioxane compound (RSiO_{1.5})ₙ and using it in combination with an organic metal salt compound and a fibril-forming type fluorinated polymer. The present invention was completed based on the discovery.

That is, the present invention provides a flame retardant polycarbonate resin composition comprising 100 parts by weight of a polycarbonate resin (A), 0.01 to 3 parts by weight of silsesquioxane (B), 0.005 to 1.0 part by weight of an organic metal salt compound (C) and 0.01 to 3 parts by weight of a fibril-forming type fluorinated polymer (D), wherein said silsesquioxane (B) has a structure shown in the chemical formula (1). 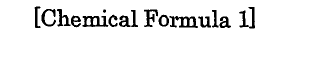 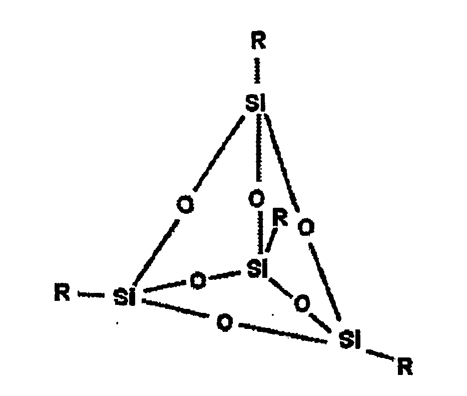 wherein R represents is one or more functional groups selected from the group comprising alkyl groups having 1 to 12 carbon atoms, vinyl groups, cycloalkyl groups and phenyl groups that may be substituted with alkyl groups.

### Advantages of the Invention

The flame retardant polycarbonate resin composition of the present invention does not use a chlorine type or bromine type flame retarding agent and can achieve a high degree of flame retardance even in a thin-walled molded product without generating a gas containing chlorine or bromine originating from said flame retarding agent at the time of combustion. Therefore, a flame retardant polycarbonate resin composition of the present invention can be ideally used in the housings or parts of electrical devices, electronic devices, ITE and the like and has an extremely industrial utility.

### Detailed Description of the Invention

The polycarbonate resin (A) used in the present invention is a polymer that can be obtained using a phosgene method in which various dihydroxy diaryl compounds and phosgene are allowed to react or an transesterification in which a dihydroxy diaryl compound and a carboxylic acid ester such as diphenyl carbonate and the like are allowed to react. As a typical polycarbonate resin, a polycarbonate resin produced using 2,2-bis(4-hydroxyphenyl) propane (bisphenol A) can be cited.

As the dihydroxy diaryl compound described above, bis(hydroxyaryl) alkanes such as bis(4-hydroxyphenyl) methane, 1,1-bis(4-hydroxyphenyl) ethane, 2,2-bis(4-hydroxyphenyl) butane, 2,2-bis(4-hydroxyphenyl) octane, bis(4-hydroxyphenyl) phenyl methane, 2,2-bis(4-hydroxyphenyl-3-methyphenyl) propane, 1,1-bis(4-hydroxy-3-tertiary butylphenyl) propane, 2,2-bis(4-hydroxy-3-bromophenyl) propane, 2,2-bis(4-hydroxy-3,5-dibromophenyl) propane and 2,2-bis(4-hydroxy-3,5-dichlorophenyl) propane; bis(hydroxyaryl) cycloalkanes such as 1,1-bis(4-hydroxyphenyl) cyclopentane and 1,1-bis(4-hydroxyphenyl) cyclohexane; dihydroxy diaryl ethers such as 4,4'-dihydroxy diphenyl ether and 4,4'-dihydroxy-3,3'-dimethyl diphenyl ether; dihydroxy diaryl sulfides such as 4,4'-dihydroxy diphenyl sulfide; dihydroxy diaryl sulfoxides such as 4,4'-dihydroxy diphenyl sulfoxide and 4,4'-dihydroxy-3,3'-dimethyl diphenyl sulfoxide; dihydroxy diaryl sulfones such as 4,4'-dihydroxy diphenyl sulfone and 4,4'-dihydroxy-3,3'-dimethyl diphenyl sulfone and the like may be cited in addition to bisphenol A.

These compounds are used individually or as a mixture of at least two of them, but the lack of halogen substitution is preferred from the standpoint of preventing emission to the environment of a gas containing halogens during combustion since they are not substituted with halogen. In addition, piperazine, dipiperyl hydroquinone, resorcinol, 4,4'-dihydroxy diphenyl and the like may be mixed and used.

Furthermore, a mixture of the dihydroxyaryl compounds described above and phenol compounds containing at least three hydroxy groups as shown below may also be used. As the phenol containing at least three hydroxy groups, fluoroglucine, 4,6-dimethyl-2,4,6-tri-(4-hydroxyphenyl)-heptane,2,4,6-dimethyl-2,4,6-tri-(4-hydroxyphenyl)-heptane, 1,3,5-tri-(4-hydroxyphenyl)-benzole, 1,1,1-tri-(4-hydroxyphenyl)-ethane and 2,2-bis-[4,4-(4,4'-dihydroxydiphenyl)-cyclohexyl]-propane and the like may be cited.

The viscosity average molecular weight is ordinarily from 10,000 to 100,000 but from 15,000 to 35,000 is preferred. When producing such a polycarbonate resin, a molecular weight adjusting agent, a catalyst and the like may be used as needed.

The silsesquioxane (B) used in the present invention is a compound with the structure indicated in the chemical formula (1) shown below.

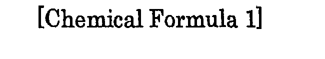

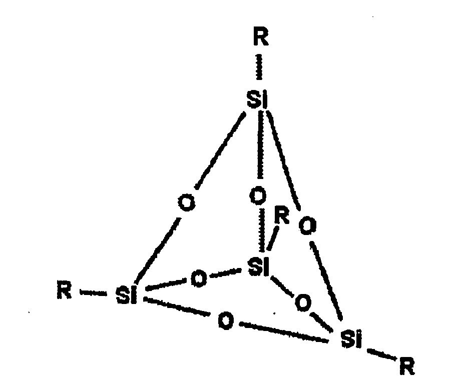

[In the chemical formula (1), R represents one or more functional groups selected from alkyl groups containing one to twelve carbon atoms, vinyl groups, cycloalkyl groups and phenyl groups that may be substituted with alkyl groups.]

Of these, the silsesquioxane compound shown by the chemical formula (2) shown below in which the functional group R is a methyl group can ideally be used.

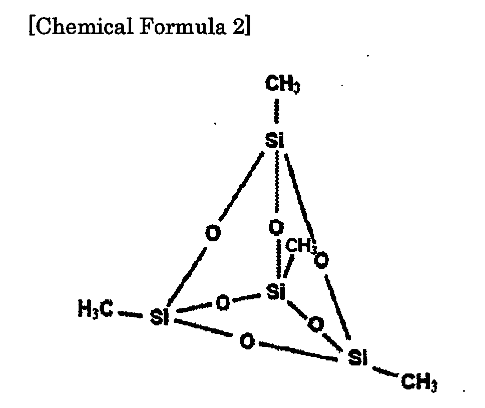

The amount of silsesquioxane (B) added is from 0.01 to 3 parts by weight per 100 parts by weight of a polycarbonate resin (A). When the amount added exceeds said range in either direction, the fire retarding effect is not adequate, making this option undesirable. A more preferred range is from 0.05 to 2 parts by weight.

As the organic metal salt compound (C) used in the present invention, metal salts of aromatic sulfonic acids and metal salts of perfluoroalkane sulfonic acids can be cited. The potassium salt of 4-Methyl-N-(4-methylphenyl) sulfonyl benzene sulfonamide, potassium diphenyulsulfone-3-sulfonate, potassium diphenylsulfone-3-3'-disulfonate, sodium para-toluene sulfonate, potassium perfluorobutane sulfonate and the like may be used preferentially.

The amount of an organic metal salt compound (C) added is 0.005 to 1.0 part by weight per 100 parts by weight of a polycarbonate resin (A). When the amount added is less than 0.005 part by weight, the flame retardance declines making this option unfavorable. In addition, when the amount added exceeds 1.0 part by weight, the mechanical properties and flame retardance decline and the surface appearance worsens, making this option unfavorable. A more preferred range is 0.01 to 0.2 part by weight.

As the fibril-forming type fluorinated polymer (D) used in the present invention, those forming fibril-like structures in polycarbonate resins are preferred. For example, poly(tetrafluoroethylene), tetrafluoroethylene type copolymers (for example, tetrafluoroethylene/hexafluoropropylene copolymers and the like), partially fluorinated polymers such as those indicated in US Patent No. 4,379,910, polycarbonates produced using fluorinated diphenol and the like may be cited.

Furthermore, a mixed powder containing a fibril-forming fluorinated polymer obtained by allowing a vinyl monomer to polymerize in a dispersion prepared by mixing an aqueous dispersion of fibril-forming fluorinated polymer particles with a particle diameter of 0.05 µm to 1.0 µm and an aqueous dispersion of organic polymer particles and subsequently coagulating or spray drying the dispersion to obtain a powder may be used. Said aqueous dispersion of fibril-forming type fluorinated polymer particles can be obtained by allowing a tetrafluoroethylene monomer to undergo emulsion polymerization using a fluorinated surfactant.

When allowing emulsion polymerization of the fibril-forming type fluorinated polymer particles to occur, fluorinated olefins such as hexafluoropropylene, chlorotrifluoroethylene fluoroalkyl ethylene, perfluoroalkyl vinyl ether and the like or fluorinated alkyl (meth)acrylates such as perfluoroalkyl (meth)acrylate and the like may be used as a copolymerization component in the range that does not adversely affect the properties of the fibril-forming type fluorinated polymer. The concentration of the copolymer component is preferably no more than 10% by weight of the tetrafluoroethylene.

As commercial raw materials for the fibril-forming type fluorinated polymer particles, Fluone AD-1 manufactured by Asahi Glass Fluoropolymers K.K., Polyflon D-1 and D-2 manufactured by Daikin Kogyo K.K., Teflon 30J manufactured by Mitsui DuPont Fluorochemical K.K. and the like may be cited.

The aqueous dispersion of organic polymer particles used to obtain a powder mixture containing fibril-forming type fluorinated polymer particles can be obtained using a vinyl monomer polymerization conducted using emulsion polymerization or other well known methods.

The vinyl monomer used to obtain an organic polymer particle aqueous dispersion or the vinyl monomer used in the polymerization allowed to occur in a mixed dispersion obtained using an aqueous dispersion of fibril-forming type fluorinated polymer particles with a particle diameter 0.05 µm to 1.0 µm and an organic polymer particle aqueous dispersion is not particularly restricted. However, those with high affinity for a polycarbonate resin (A) are preferred from the standpoint of dispersion properties when adding them to the polycarbonate resin (A).

As specific examples of these vinyl monomers, aromatic vinyl monomers such as styrene, α-methylstyrene, p-methylstyrene, o-methylstyrene, t-butylstyrene o-ethylstyrene, p-chlorostyrene, o-chlorostyrene, 2,4-dichlorostyrene, p-methoxystyrene, o-methoxystyrene, 2,4-dimethylstyrene and the like; (meth)acrylate ester monomers such as methyl acrylate, methyl methacrylate, ethyl acrylate, ethyl methacrylate, butyl acrylate, butyl methacrylate, 2-ethylhexyl acrylate, 2-ethylhexyl methacrylate, dodecyl acrylate, dodecyl methacrylate, tridecyl acrylate, tridecyl methacrylate, octadecyl acrylate, octadecyl methacrylate, cyclohexyl acrylate, cyclohexyl methacrylate and the like; vinyl cyanide monomers such as acrylonitrile, methacrylonitrile and the like; α,β-unsaturated carboxylic acids such as maleic anhydride and the like; maleimide monomers such as N-phenyl maleimide, N-methyl maleimide, N-cyclohexyl maleimide and the like; epoxy group-containing monomers such as glycidyl methacrylate and the like; vinyl ether monomers such as vinyl methyl ether, vinyl ethyl ether and the like; vinyl carboxylate monomers such as vinyl acetate, vinyl butyrate and the like; α-olefin monomers such as ethylene, propylene, isobutylene and the like and diene monomers such as butadiene, isoprene, dimethyl butadiene and the like may be cited.

Of these monomers, monomers containing at least 30% by weight of at least one monomer selected from a group comprising aromatic vinyl monomers and vinyl cyanide monomers are preferred. Monomers containing at least 30% by weight of at least one monomer selected from the group comprising styrene and acrylonitrile are particularly preferred.

A concentration of the fibril-forming type fluorinated polymer in a powder mixture containing a fibril-forming type fluorinated polymer of 0.1% by weight to 90% by weight is preferred. When the concentration is less than 0.1% by weight, the flame retardance improving effect is not sufficient. When the concentration exceeds 90% by weight, the surface appearance can potentially be adversely affected, making this option unfavorable.

A powder mixture containing a fibril-forming type fluorinated polymer can be converted into a powder by adding its aqueous dispersion into a solution of a metal salt such as calcium chloride, magnesium sulfate and the like dissolved in hot water, salting out to separate and coagulate the polymer and subsequently drying or spray drying.

The amount of fibril-forming type fluorinated polymer (D) added is 0.01 part by weight to 3 parts by weight per 100 parts by weight of a polycarbonate resin (A). When the amount added is less than 0.01 part by weight, the drip prevention effect is poor and the flame retardance declines, making this option unfavorable. In addition, when the amount added exceeds 3 parts by weight, the surface appearance and impact properties worsen, making this option unfavorable. The preferred range is 0.1 to 1.5 parts by weight, and 0.2 to 1.0 part by weight is more preferred.

Furthermore, various additives such as thermal stabilizers, antioxidants, coloring agents, fluorescent whitening agents, mold releasing agents, softening agents, antistatic agents and the like, inorganic fillers, impact modifiers and other resins may also be added in ranges that do not adversely affect the advantages of the present invention.

The method used to blend various components for the polycarbonate resin composition of the present invention is not particularly restricted, and the components may be blended using a well known mixer such as a tumbler, a ribbon blender and the like or compounding by using of an extruder.

In addition, the method used to mold a flame retardant polycarbonate resin composition of the present invention is not particularly restricted, and a well known injection molding method, injection-compression molding method and the like may be used.

### Examples

The present invention is more specifically illustrated by the Examples below, but the present invention is not limited to these Examples. The term "parts" refer to a weight standard unless otherwise noted.

As the components, the following materials were used.
(A) Polycarbonate resin: Sumitomo Dow K.K., Calibre 200-20 (henceforth abbreviated to PC).
(B) Silsesquioxane: (1) Niko Rika K.K. MSP-S020 (Triangular cone methyl silsesquioxane, henceforth abbreviated to T4 compound (2) Aldrich Co. Octaphenyl-T8-silsesquioxane (Cubic phenyl silsesquioxane, henceforth abbreviate to T8 compound).
(C) Organic metal salt compound: (1) Sodium para-toluene sulfonate (Wako Junyaku Shiyaku, henceforth abbreviated to metal salt-1); (2) Potassium salt of perffuoroalkane sulfonic acid (BayowetC4 manufactured by LANXESS Co., henceforth abbreviated to metal salt-2).
(D) Fibril-forming type fluorinated polymer: Daikin Kagaku Kogyo K.K., FA500 (henceforth abbreviated to PTFE).

The various raw materials described above were added all at once to a tumbler in the proportions shown in Tables 2 and 3 and were blended dry for ten minutes. A twin extruder (KTX37 manufactured by Kobe Seikosho) was subsequently used to compound the mixture at a melt temperature of 280°C, and pellets of the various polycarbonate resin compositions were obtained.

The pellets obtained were used to prepare various test pieces using an injection molding device (J100E-C5 manufactured by Nippon Seikosho K.K.), and various data were collected according to the methods described below.

### (1) Flame retardance:

The flame retardance was evaluated using the UL94V vertical flammability test method described below. Said test pieces were left standing for 48 hours in a constant temperature chamber maintained at 23°C and 50% humidity, and the flame retardance was evaluated according to the UL94 test (flammability test for a plastic material for use in equipment parts) specified by Underwriters Laboratories. The UL94V test involved holding a burner flame for 10 seconds in contact with a test piece of a designated size held in a vertical position, and the flame retardance was evaluated based on the duration of time a residual flame was observed and on the drip properties. The test piece was rated into the following categories. A test piece was rated unsuitable (NR) if it did not fit the categories below.

**[Table 1]**

| | V-0 | V-1 | V-2 |
|---|---|---|---|
| Residual flame time for each sample | 10 sec or less | 30 sec or less | 30 sec or less |
| Total residual flame time for five samples | 50 sec or less | 250 sec or less | 250 sec or less |
| Cotton ignition caused by the drips | None | None | Observed |

The residual flame time shown in Table 1 referred to the duration of time during which a test piece continued to flame and burn after an ignition source was removed. Cotton ignition caused by the drips was decided by whether a cotton piece positioned about 300 mm under the lower edge of a test piece was ignited by the droppings (drips) from the test piece. In the evaluation standard, V-2 or better passed for a test piece 1.0 mm thick.

### (2) Surface appearance:

Test pieces 90 mm long, 40 mm wide containing three stages (thickness was 3 mm, 2 mm and 1 mm) were prepared, and their appearances were visually examined.

**[Table 2]**

| | Examples | | | | | | |
|---|---|---|---|---|---|---|---|
| | 1 | 2 | 3 | 4 | 5 | 6 | 7 |
| PC (parts) | 100 | 100 | 100 | 100 | 100 | 100 | 100 |
| T4 Cpd. (parts) | 0.1 | 1.0 | 2.0 | 1.0 | 1.0 | 1.0 | 1.0 |
| Metal salt-1 (parts) | 0.05 | 0.05 | 0.05 | 02 | 0.05 | -- | -- |
| Metal salt-2 (parts) | -- | -- | -- | -- | -- | 0.05 | 0.2 |
| PTFE (parts) | 0.3 | 0.3 | 0.3 | 0.3 | 2 | 0.3 | 0.3 |
| Flame retardance 1.00 mm thick | V-0 | V-0 | V-0 | V-0 | V-0 | V-0 | V-0 |
| Surface appearance | Good | Good | Good | Good | Good | Good | Good |

**[Table 3]**

| | Comparative Examples | | | | | | |
|---|---|---|---|---|---|---|---|
| | 1 | 2 | 3 | 4 | 5 | 6 | 7 |
| PC (parts) | 100 | 100 | 100 | 100 | 100 | 100 | 100 |
| T4 Cpd. (parts) | 0.005 | 5 | 1.0 | 1.0 | 1.0 | 1.0 | -- |
| T8 Cpd. (parts) | -- | -- | -- | -- | -- | -- | 1.0 |
| Metal salt-1 (Parts) | 0.05 | 0.05 | 0.001 | 1.5 | 0.05 | 0.05 | 0.05 |
| Metal salt-2 (Parts) | -- | -- | -- | -- | -- | -- | -- |
| PTFE (parts) | 0.3 | 0.3 | 0.3 | 0.3 | 0.1 | 3 | 0.3 |
| Flame retardance 1.00 mm thick | V-2 | V-0 | V-2 | V-1 | V-2 | V-0 | V-1 |
| Surface appearance | Good | Poor | Good | Poor | Poor | Poor | Good |

As shown in Table 2, even test pieces 1.0 mm thick exhibited a V-0 level flame retardance when the requirement of the present invention was satisfied (Examples 1-7), and the test pieces had both a high degree of flame retardance and excellent surface appearance.

In contrast, all examples exhibited one problem or another as shown in Table 3 when therequirement of the present invention were not satisfied.
In Comparative Example 1, the amount of silsesquioxane in the form of T4 compound added was less than the amount specified, and the flame retardance was inadequate.
In Comparative Example 2, the amount of silsesquioxane in the form of T4 compound added exceeded the amount specified. The flame retardance was adequate, but the surface appearance was inadequate.
In Comparative Example 3, the amount of an organic metal salt in the form of metal salt-1 added was less than the amount specified, and the flame retardance was inadequate.
In Comparative Example 4, the amount of an organic metal salt in the form of metal salt-1 added exceeded the amount specified. The flame retardance and the surface appearance were inadequate.
In Comparative Example 5, the amount of PTFE added was less than the amount specified, and the flame retardance was inadequate.
In Comparative Example 6, the amount of PTFE added exceeded the amount specified. The flame retardance was adequate, but the surface appearance was inadequate.
Comparative Example 7 is an example in which silsesquioxane in the form of T4 compound was replaced with T8 compound with a conventional cage type cubic structure. Although the surface appearance was excellent, the flame retardance was inadequate.

## Claims

1. A flame retardant polycarbonate resin composition comprising 100 parts by weight of a polycarbonate resin (A), 0.01 to 3 parts by weight of silsesquioxane (8), 0.005 to 1.0 part by weight of an organic metal salt compound (C) and 0.01 to 3 parts by weight of a fibril-forming type fluorinated polymer (D), wherein said silsesquioxane (B) has a structure shown in the chemical formula (1). 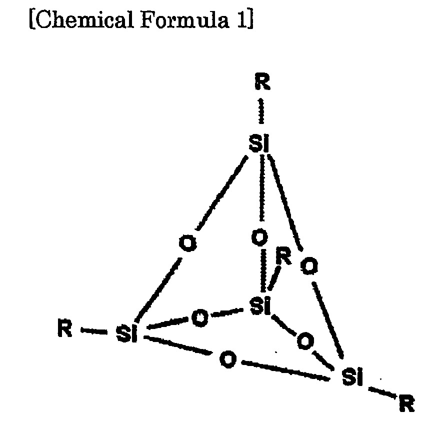 wherein R represents is one or more functional groups selected from the group comprising alkyl groups having 1 to 12 carbon atoms, vinyl groups, cycloalkyl groups and phenyl groups that may be substituted with alkyl groups.

2. The flame retardant polycarbonate resin composition of claim 1, wherein the silsesquioxane (B) is shown by the chemical formula (2).

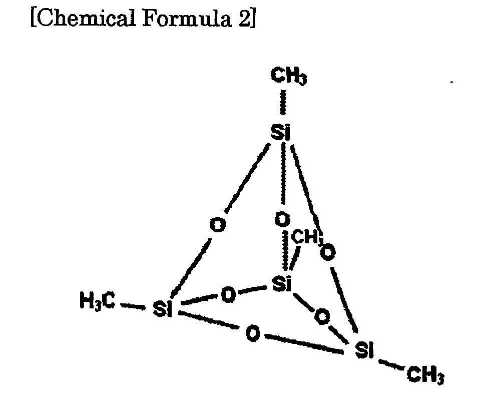

3. The polycarbonate resin composition of claim 1 or 2, wherein the organic metal salt compound (C) is a metal salt of aromatic sulfonic acid.

4. The polycarbonate resin composition of claim 1 or 2, wherein the organic metal salt compound (C) is a metal salt of a perfluoroalkane sulfonic acid.

5. A molded product manufactured by molding the flame retardant polycarbonate resin composition of any one of claims 1 to 4.

## Patentansprüche

1. Flammwidrige Polycarbonatharzzusammensetzung, die 100 Gewichtsteile eines Polycarbonatharzes (A), 0,01 bis 3 Gewichtsteile Silsesquioxan (B), 0,005 bis 1,0 Gewichtsteile einer organischen Metallsalzverbindung (C) und 0,01 bis 3 Gewichtsteile eines fluorierten Polymers vom fibrillenbildenden Typ (D) umfasst, wobei das Silsesquioxan (B) eine in der chemischen Formel (1) dargestellte Struktur besitzt: 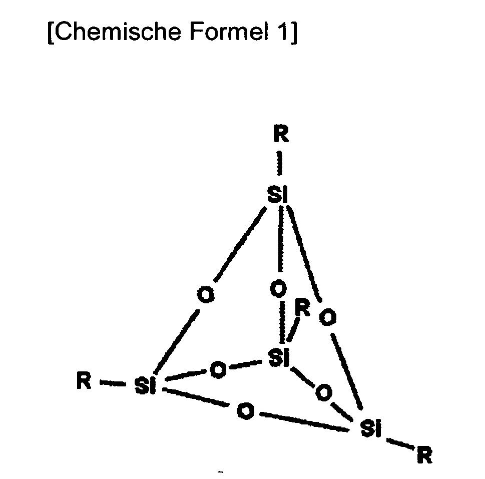 worin R eine oder mehrere funktionelle Gruppen repräsentiert, die aus der Alkylgruppen mit 1 bis 12 Kohlenstoffatomen, Vinylgruppen, Cycloalkylgruppen und Phenylgruppen, die mit Alkylgruppen substituiert sein können, umfassenden Gruppe ausgewählt sind.

2. Flammwidrige Polycarbonatharzzusammensetzung nach Anspruch 1, wobei das Silsesquioxan (B) durch die chemische Formel (2) dargestellt wird.

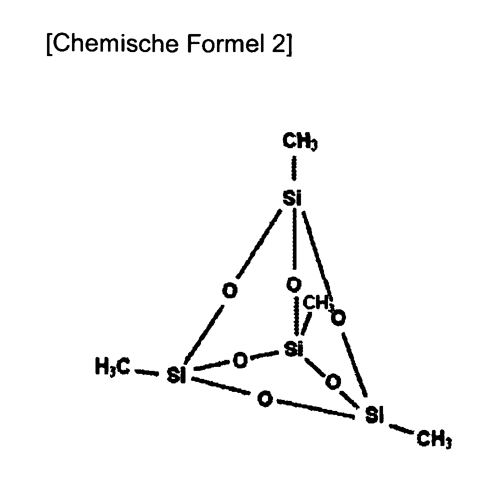

3. Polycarbonatharzzusammensetzung nach Anspruch 1 oder 2, wobei die organische Metallsalzverbindung (C) ein Metallsalz von aromatischer Sulfonsäure ist.

4. Polycarbonatharzzusammensetzung nach Anspruch 1 oder 2, wobei die organische Metallsalzverbindung (C) ein Metallsalz einer Perfluoralkansulfonsäure ist.

5. Geformtes Produkt, das hergestellt ist durch Formen der flammwidrigen Polycarbonatharzzusammensetzung nach einem der Ansprüche 1 bis 4.

## Revendications

1. Composition de résine polycarbonate ignifugée, comprenant 100 parties en poids d'une résine polycarbonate (composant A), 0,01 à 3 parties en poids d'un silasesquioxane (composant B), 0,005 à 1,0 partie en poids d'un composé de type sel organique de métal (composant C), et 0,01 à 3 parties en poids d'un polymère fluoré formant des fibrilles (composant D), dans laquelle composition ledit silasesquioxane (composant B) possède la structure représentée dans la formule chimique 1 : 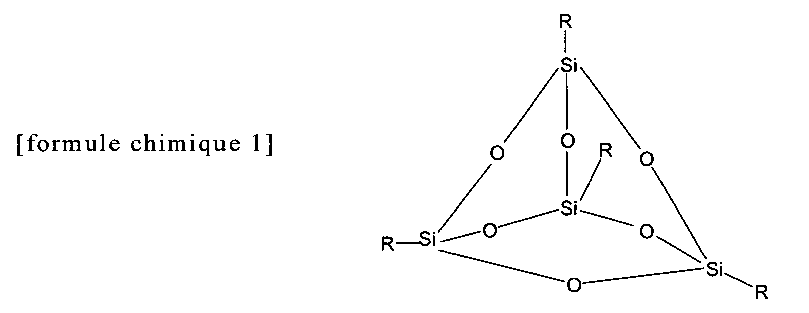 dans laquelle R représente un groupe fonctionnel d'un ou plusieurs types, choisi dans l'ensemble comprenant les groupes alkyle comportant 1 à 12 atomes de carbone, le groupe vinyle, les groupes cycloalkyle et le groupe phényle, lequel peut porter des substituants alkyle.

2. Composition de résine polycarbonate ignifugée, conforme à la revendication 1, dans laquelle le silasesquioxane (composant B) est le composé représenté par la formule chimique 2 :

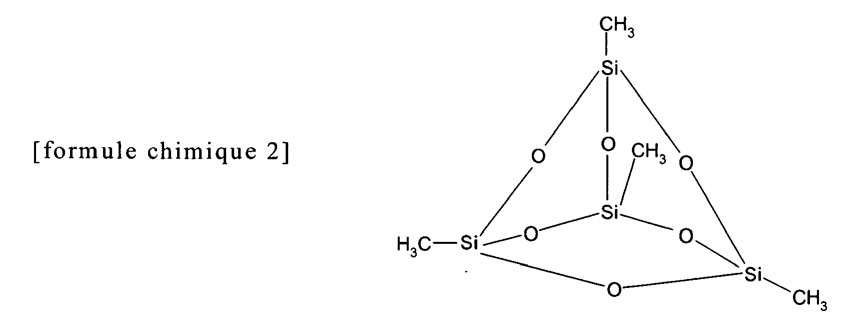

3. Composition de résine polycarbonate, conforme à la revendication 1 ou 2, dans laquelle le composé de type sel organique de métal (composant C) est un sel de métal d'un acide sulfonique aromatique.

4. Composition de résine polycarbonate, conforme à la revendication 1 ou 2, dans laquelle le composé de type sel organique de métal (composant C) est un sel de métal d'un acide perfluoroalcane-sulfonique.

5. Produit moulé, fabriqué par moulage d'une composition de résine polycarbonate ignifugée, conforme à l'une des revendications 1 à 4.
